# EUROPÄISCHE PATENTSCHRIFT

(11) **EP 0 541 040 B1**
(45) Veröffentlichungstag und Bekanntmachung des Hinweises auf die Patenterteilung: **05.04.1995**
(21) Anmeldenummer: 92118806.6
(22) Anmeldetag: 03.11.1992
(51) Int. Cl.: F16F 9/04

(54) **Rollbalgluftfeder aus elastomerem Werkstoff**
Rolling-lobe airspring made of an elastomer
Ressort pneumatique à soufflet roulant en élastomère

(30) Priorität: 06.11.1991 DE 4136460
(43) Veröffentlichungstag der Anmeldung: 12.05.1993
(73) Patentinhaber: Continental Aktiengesellschaft, 30165 Hannover (DE)
(72) Erfinder: Pahl, Hans-Joachim, W-3003 Ronnenberg 4 (DE); Bach, Wolfgang, W-3000 Hannover 1 (DE)

(56) Entgegenhaltungen:
- EP-A- 0 448 833
- DE-A- 2 905 791
- PATENT ABSTRACTS OF JAPAN vol. 13, no. 281 (M-842)(3629) 27. Juni 1989 & JP-A-01 74 333 (SUMITOMO ELECTRIC IND LTD) 20. März 1989

## Beschreibung

Die Erfindung betrifft einen Luftfeder-Rollbalg aus elastomerem Werkstoff mit einer Festigkeitsträgerlage aus Zwei sich kreuzenden Cordgewebelagen, dessen beide Enden jeweils an einem Anschlußteil befestigt sind und der im Betriebszustand eine sich bei den Federungsvorgängen ändernde Rollfalte bildet.

Luftfeder-Rollbälge haben sich z.B. als Fahrzeugfederungen, insbesondere zur Abfederung der Radachsen von Lastkraftwagen und Autobussen, in großem Umfang bewährt. Die Rollbälge sind dabei an einem Ende an einem Abrollkolben befestigt, der gewöhnlich aus Metall oder Kunststoff gefertigt ist. Im Betriebszustand bewegt sich der Kolben innerhalb des Rollbalges, der sich umstülpt und eine Rollfalte bildet, die über der Außenfläche des Abrollkolbens abrollt.

Bei dem Einbau einer Rollbalgluftfeder tritt oft das technische Problem auf, daß der zur Verfügung stehende Einbauraum gering ist und beispielsweise einzelne Bauteile der Achsaufhängung den Einbau des Luftfederrollbalges behindern.

Der Erfindung liegt die Aufgabe Zugrunde, einen Luftfeder-Rollbalg zu schaffen, der einen geringeren Einbauraum benötigt, ohne die physikalischen Eigenschaften der Rollbalgluftfeder wesentlich zu beeinträchtigen.

Die Aufgabe wird erfindungsgemäß durch die Merkmale des Anspruchs 1 gelöst.

Die zusätzliche Gewebedoppellage wird bei der Konfektion des Rollbalges in einem Bandbereich sich anschließend an ein Balgende im Rollbalg angeordnet. Der kleinere Fadenwinkel der zusätzlichen Gewebedoppellage gegenüber dem Fadenwinkel der Festigkeitsträgerlage führt bei der Vergrößerung des Rollbalg-Durchmessers im Fahrzeug aufgrund der Druckbeaufschlagung dazu, daß der vorgesehene Betriebsdurchmesser im Bereich der zusätzlichen Gewebedoppellage nicht erreicht wird, sondern daß in diesem Bereich ein Einsprung oder eine Durchmesserreduzierung des Luftfeder-Rollbalges vorliegt. Dieser umfangsmäßig reduzierte Bereich des Rollbalges liegt entgegengesetzt zur sich bildenden Rollfalte.

In vorteilhafter Ausgestaltung der Erfindung ist die zusätzliche, gummierte Gewebedoppellage ausgehend von dem der Rollfalte gegenüberliegenden Einspannbereich in einem ringförmigen Bandbereich angeordnet. Diese Ausbildung ergibt einen sich an den der Rollfalte gegenüberliegenden Einspannbereich anschließenden eingezogenen Durchmesserbereich des Luftfeder-Rollbalges. Die Einbaupositionierung eines derartigen Luftfeder-Rollbalges ist in einfacher Weise durchführbar.

In weiterer vorteilhafter Ausgestaltung der Erfindung erstreckt sich die zusätzliche Gewebedoppellage nur über einen Teil des Umfangs des Luftfeder-Rollbalges. Erfordern die Einbauverhältnisse die Umfangsreduzierung des Luftfeder-Rollbalges lediglich an einer bestimmten Stelle, kann mit dieser Ausbildung der benötigte Einsprung bzw. die Durchmesserreduzierung des Rollbalges mit einer geringeren Menge Gewebe für die zusätzliche Gewebedoppellage realisiert werden.

In vorteilhafter Weise wird die zusätzliche Gewebedoppellage zwischen den beiden Cordgewebelagen der Festigkeitsträgerlage angeordnet. Dadurch wird ein sicheres Fixieren der zusätzlichen Gewebedoppellage erreicht.

Durch die Erfindung reicht für den Einbau des Luftfeder-Rollbalgs ein verringerter Einbauraum aus, da der Einsprung des Rollbalges bzw. der eingezogene Durchmesserbereich die Möglichkeit bietet, andere Einbauteile, z.B. Teile der Achsaufhängung, in den Umriß des Luftfeder-Rollbalges hineinragen zu lassen.

Anhand der Zeichnung werden nachstehend zwei Ausführungsbeispiele der Erfindung näher erläutert. Es zeigt:
- Fig. 1: einen Luftfeder-Rollbalg im Konfektionszustand (strichpunktierte Linien) und im Betriebszustand zwischen zwei Anschlußteilen eingespannt;
- Fig. 2: in schematischer Darstellung die sich kreuzenden Cordgewebelagen des Luftfeder-Rollbalges im Konfektionszustand;
- Fig. 3: in schematischer Darstellung die sich kreuzenden Cordgewebelagen des Luftfeder-Rollbalges im Betriebszustand,
- Fig. 4: einen Luftfeder-Rollbalg mit einem Einsprung seiner Außenkontur lediglich über einen Teil seines Umfanges,
- Fig. 5: einen Querschnitt gemäß Linie V-V in Figur 4,
- Fig. 6: in schematischer Darstellung die sich kreuzenden Gewebelagen von Festigkeitsträgerlage und sich nur über einen Umfangsteil erstreckenden zusätzlichen Gewebedoppellage.

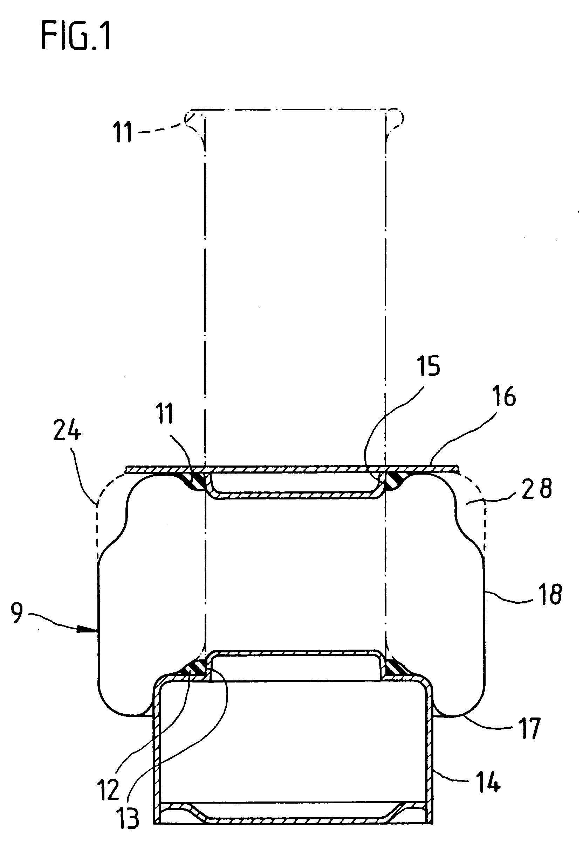

Der in der Fig. 1 gezeigte Luftfeder-Rollbalg 9 weist an seinen beiden Enden Befestigungswülste 11 und 12 auf. Die strichpunktierte Darstellung des zylinderförmigen Luftfeder-Rollbalges 9 entspricht der Kontur im Konfektionszustand. Im Betriebszustand (durchgezogene Linien) ist der Luftfeder-Rollbalg 9 mit dem unteren Befestigungswulst 12 auf einen konischen Dichtsitz 13 eines Abrollkolbens 14, der ein Anschlußteil darstellt, und mit seinem oberen Befestigungswulst 11 auf einem konischen Dichtsitz 15 eines Anschlußteiles 16 durch den im Innenraum des Luftfeder-Rollbalges 9 herrschenden Innendruck eingespannt.

Im Betriebszustand der Rollbalgluftfeder bildet sich die Rollfalte 17, die beim Ein- und Ausfedern über die Außenwand des Abrollkolbens 14 abrollt.

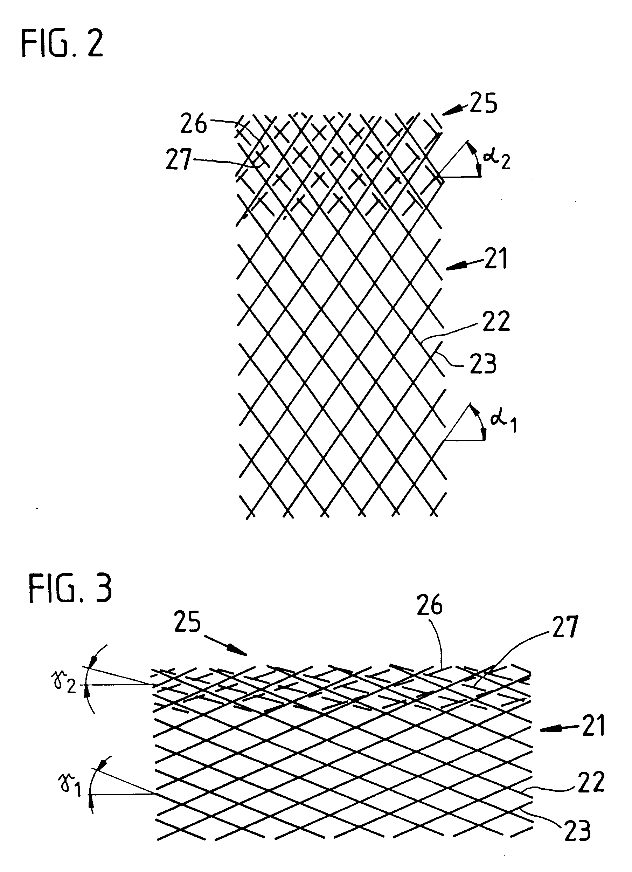

In der elastomeren Balgwand 18 ist eine Festigkeitsträgerlage 21 (Fig. 2) eingebettet, die aus zwei sich kreuzenden Cordgewebelagen 22 und 23 besteht. Der Fadenwinkel des Cordgewebes 22, 23 liegt üblicherweise zwischen 50° und 60°.

Zusätzlich zu dieser Festigkeitsträgerlage 21 ist in einem ringförmigen Bandbereich 24 im nicht rollenden Bereich des Rollbalges 9 eine Gewebedoppellage 25 angeordnet. Die Gewebedoppellage 25 schließt sich direkt an den Befestigungswulst 11 an und besteht ebenfalls aus zwei sich kreuzenden Cordgewebelagen 26 und 27. Diese beiden Cordgewebelagen 26 und 27 liegen zwischen den beiden Cordgewebelagen 22 und 23 der Festigkeitsträgerlage 21. Der Fadenwinkel der zusätzlichen Gewebedoppellage 25 ist 5° bis 10° kleiner als der Fadenwinkel in der Festigkeitsträgerlage 21.

In der Fig. 2 werden die Festigkeitsträgerlage 21 und die zusätzliche Gewebedoppellage 25 im Konfektionszustand des Luftfeder-Rollbalges 9, d.h. im drucklosen Zustand gezeigt. Dieser Rollbalg 9 wird in üblicher Weise in der Vulkanisationsform mittels Innendruck auf einen größeren Durchmesser aufgebläht und ausgeheizt. Bei der Vergrößerung des Durchmessers in der Vulkanisationsform ändern sich die Cordfäden so, daß nun ein kleinerer Winkel zwischen Faden- und Umfangsrichtung entsteht. Dabei bleibt weiterhin, daß die Fadenwinkel der zusätzlichen Gewebedoppellage 25 kleiner sind als die Fadenwinkel der Festigkeitsträgerlage 21.

Der vulkanisierte Rollbalg 9 wird im Fahrzeug mittels Innendruck auf die konischen Dichtflächen 13 und 15 der Anschlußteile 14 und 16 montiert. Durch den Innendruck wird der konstruktiv vorgesehene Betriebsdurchmesser des Rollbalges 9 erreicht. Dabei entsteht im oberen nicht rollenden Bereich des Rollbalges 9 ein Einsprung 28 des Rollbalgdurchmessers im Bereich 24 der zusätzlichen Gewebedoppellage 25. Die Reduzierung des Rollbalgumfanges in diesem, der Rollfalte 17 entgegengesetzten Bereich erlaubt es, daß andere Einbauteile des Fahrzeuges in die Umrißkontur (gestrichelte Linie) hineinragen können. Der Einbauraum wird optimal ausgenutzt.

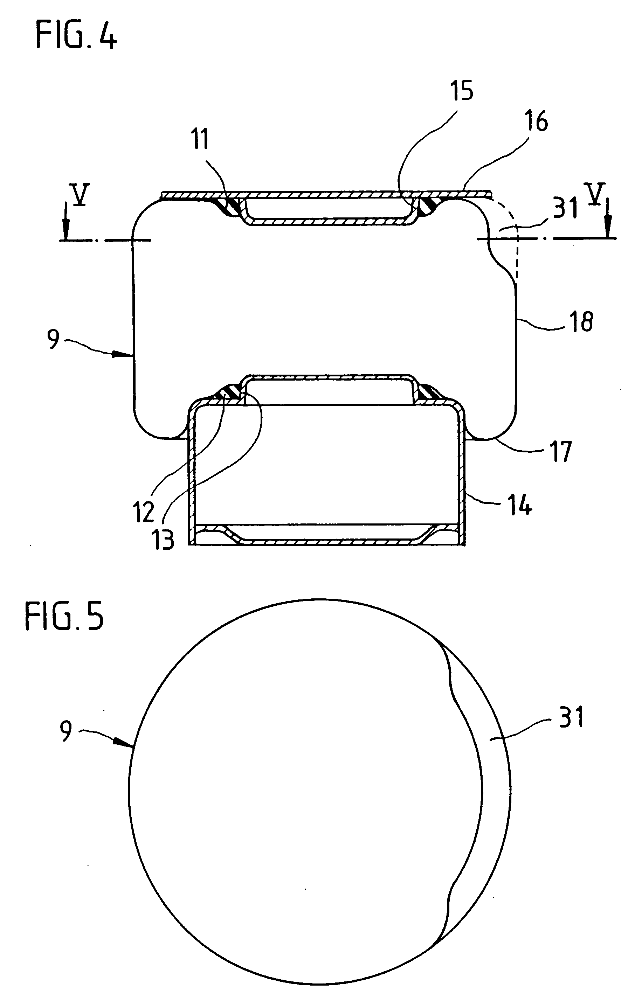

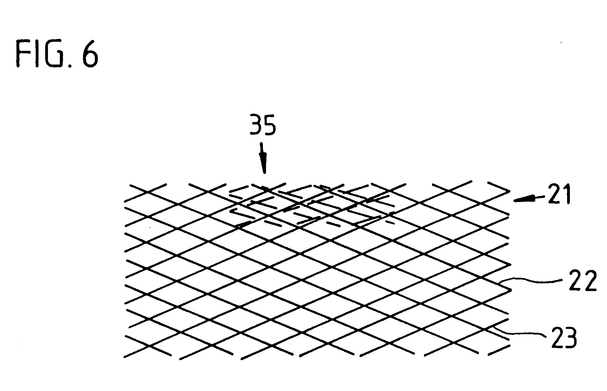

Der in der Fig. 4 gezeigte Luftfeder-Rollbalg 9 weist auf einem Teil seines Umfangs im der Rollfalte 17 gegenüberliegenden Einspannbereich eine Abplattung 31 auf. Diese Abplattung wird durch einen Abschnitt einer zusätzlichen Gewebedoppellage 35 bewirkt, die zwischen zwei Cordgewebelagen 22 und 23 der Festigkeitsträgerlage 21 liegt (Fig. 6).

Im Betriebszustand entsteht im oberen nicht rollenden Bereich des Rollbalges 9 die Abflachung 31. In diesen Freiraum (gestrichelte Linie) können andere Einbauteile des Fahrzeuges hineinragen.

### Bezugszeichenliste

- 9: Luftfeder-Rollbalg
- 11: Befestigungswulst
- 12: Befestigungswulst
- 13: Konischer Dichtsitz
- 14: Abrollkolben
- 15: Konischer Dichtsitz
- 16: Anschlußteil
- 17: Rollfalte
- 18: Elastomere Balgwand
- 21: Festigkeitsträgerlage
- 22: Cordgewebelage
- 23: Cordgewebelage
- 24: Ringförmiger Bandbereich
- 25: Zusätzliche Gewebedoppellage
- 26: Cordgewebelage
- 27: Cordgewebelage
- 28: Durchmessereinsprung
- 31: Abflachung
- 35: Zusätzliche Gewebedoppellage, Abschnitt

## Patentansprüche

1. Luftfeder-Rollbalg aus elastomerem Werkstoff mit einer Festigkeitsträgerlage aus zwei sich kreuzenden, gummierten Cordgewebelagen, dessen beide Enden jeweils an einem Anschlußteil befestigt sind und der im Betriebszustand eine sich bei Federungsvorgängen ändernde Rollfalte bildet,
**gekennzeichnet durch folgende Merkmale:**
- in der Balgwand des Luftfeder-Rollbalges ist eine zusätzliche, gummierte Gewebedoppellage (25) aus zwei sich kreuzenden Cordgewebelagen (26, 27) angeordnet, die sich an den eingespannten Endbereich, der der Rollfalte (17) gegenüber liegt, anschließt,
- die zusätzliche Gewebedoppellage (25) erstreckt sich in Richtung der Rollbalglängsachse ganz oder teilweise über den nicht rollenden Bereich des Luftfeder-Rollbalges,
- der Fadenwinkel der zusätzlichen Cordgewebelagen (26, 27) ist kleiner als der Fadenwinkel der Cordgewebelagen (22, 23) der Festigkeitsträgerlage (21).

2. Luftfeder-Rollbalg nach Anspruch 1, dadurch gekennzeichnet, daß die zusätzliche, gummierte Gewebedoppellage (25) ausgehend von dem der Rollfalte (17) gegenüberliegenden Einspannbereich in einem ringförmigen Bandbereich (24) angeordnet ist.

3. Luftfeder-Rollbalg nach Anspruch 1, dadurch gekennzeichnet, daß die zusätzliche Gewebedoppellage (25) sich nur über einen Teil des Umfangs des Rollbalges erstreckt.

4. Luftfeder-Rollbalg nach einem der Ansprüche 1 bis 3, dadurch gekennzeichnet, daß die zusätzliche Gewebedoppellage (25) zwischen den beiden Cordgewebelagen (22, 23) der Festigkeitsträgerlage (21) angeordnet ist.

## Claims

1. Air spring roller bellows formed from elastomeric material with a reinforcing member ply formed from two intersecting rubber-coated cord fabric plies, both ends of which material are respectively secured to a connection member and which material, in the operational state, forms a roller fold which changes during suspension operations,
**characterised by the following features**:
- an additional rubber-coated double fabric ply (25), formed from two intersecting cord fabric plies (26, 27), is disposed in the bellows wall of the air spring roller bellows and communicates with the clamped-in end region lying opposite the roller fold (17);
- the additional double fabric ply (25) extends in the direction of the longitudinal axis of the roller bellows, wholly or partially over the non-rolling region of the air spring roller bellows;
- the filament angle of the additional cord fabric plies (26, 27) is smaller than the filament angle of the cord fabric plies (22, 23) of the reinforcing member ply (21).

2. Air spring roller bellows according to claim 1, characterised in that the additional rubber-coated double fabric ply (25), starting from the clamping region situated opposite the roller fold (17), is disposed in an annular belt region (24).

3. Air spring roller bellows according to claim 1, characterised in that the additional double fabric ply (25) extends over only part of the circumference of the roller bellows.

4. Air spring roller bellows according to one of claims 1 to 3, characterised in that the additional double fabric ply (25) is disposed between the two cord fabric plies (22, 23) of the reinforcing member ply (21).

## Revendications

1. Ressort pneumatique à soufflet roulant constitué d'un matériau élastomère et comportant une couche porteuse résistante formée de deux plis de tissu câblé qui se croisent, dont les deux extrémités sont respectivement fixées sur une partie de liaison et qui créent dans l'état de fonctionnement un pli de roulement modifiant les conditions de suspension, caractérisé par les particularités suivantes :
- dans la paroi du soufflet roulant du ressort pneumatique, il est prévu une double couche de tissu caoutchouté additionnelle (25) constituée de deux couches de tissu câblé (26, 27) qui se croisent et qui est disposée à la suite de la zone d'extrémité rétractée qui est située à l'opposé du pli de roulement (17),
- la double couche de tissu additionnelle (25) s'étend, dans la direction de l'axe longitudinal du soufflet roulant, complètement ou en partie sur la zone non roulante du soufflet roulant du ressort pneumatique,
- l'angle des fils des couches de tissu câblé additionnelles (26, 27) est plus petit que l'angle des fils des couches de tissu câblé (22, 23) de la couche porteuse résistante (21).

2. Ressort pneumatique à soufflet roulant selon revendication 1, caractérisé en ce que la double couche de tissu caoutchouté additionnelle (25) est disposée, à partir de la zone de rétraction située à l'opposé du pli de roulement (17), dans une zone de bordure de forme annulaire (24).

3. Ressort pneumatique à soufflet roulant selon la revendication 1, caractérisé en ce que la double couche de tissu additionnelle (25) s'étend seulement sur une partie du pourtour du soufflet roulant.

4. Ressort pneumatique à soufflet roulant selon une des revendications 1 à 3, caractérisé en ce que la double couche de tissu additionnelle (25) est disposée entre les deux couches de tissu câblé (22, 23) de la couche porteuse résistante (21).
